# FASCICULE DE BREVET EUROPEEN

(11) **EP 1 353 876 B1**
(45) Date de publication et mention de la délivrance du brevet: **23.01.2008**
(21) Numéro de dépôt: 01995790.1
(22) Date de dépôt: 24.12.2001
(51) Int. Cl.: C01B 33/143, C01B 33/148

(54) **PROCEDE POUR LA PREPARATION DE SOLS DE SILICE**
VERFAHREN ZUR HERSTELLUNG VON SILICIUMOXIDSOLEN
METHOD FOR PREPARING SILICA SOLS

(30) Priorité: 26.12.2000 FR 0017059
(43) Date de publication de la demande: 22.10.2003
(73) Titulaire: RHODIA CHIMIE, 92512 Boulogne-Billancourt Cedex (FR)
(72) Inventeur: HORBEZ, Dominique, F-95130 Franconville (FR); MAGNE, Jean-Claude, F-95430 BUTRY sur OISE (FR); LAGOUTTE, Edith, F-69680 Chassieu (FR)
(74) Mandataire: Bernasconi, Jean Raymond
(86) Numéro de dépôt international: PCT/FR2001/004192
(87) Numéro de publication internationale: WO 2002/051748

(56) Documents cités:
- EP-A- 0 170 578
- WO-A-99/36358
- US-A- 3 668 088
- DATABASE WPI Section Ch, Week 197708 Derwent Publications Ltd., London, GB; Class A97, AN 1977-13719Y XP002176968 & JP 52 003833 A (UENO M), 12 janvier 1977 (1977-01-12)

## Description

La présente invention se situe dans le domaine des sols de silice et concerne plus particulièrement un procédé de préparation de ces sols.

Les silices sont utilisées dans des domaines très variés comme le caoutchouc, le papier ou encore les revêtements, notamment en tant que charge de renfort.

Elles sont classiquement préparées par réaction entre un silicate et un agent acidifiant au cours de laquelle il se forme des sels sous-produits. Cette réaction peut être réalisée par mélange d'un silicate avec un acide fort (minéral ou organique).

Après synthèse de la silice, le sol résultant est soumis à une étape de séparation de ces sels et éventuellement à une opération de concentration.

Plusieurs voies ont été utilisées dans la technique pour éliminer les sels présents dans les sols de silice obtenus.

On peut citer l'emploi de résines échangeuses d'ions qui permettent de purifier les sols de silice après leur formation.

En alternative, on a également utilisé l'ultrafiltration pour purifier ou concentrer les sols. En variante, il est également connu du brevet US 3 969 266 (Du Pont de Nemours) l'utilisation de l'ultrafiltration pour le dessalement en cours de précipitation.

Les modes de préparation connus dans la technique subissent généralement l'influence des sels formés lors de la réaction du silicate avec l'agent acidifiant qui provoquent des phénomènes d'agrégation et d'agglomération. Il n'est ainsi pas possible de contrôler l'agrégation ou l'agglomération des particules de silice dans les sols obtenus.

Or, ces agrégats ou agglomérats rendent les sols difficilement utilisables dans certaines applications.

L'objectif de la présente invention est de fournir un procédé de préparation de sols de silice présentant un taux réduit d'agrégation et d'agglomération des particules de silice.

L'objectif de l'invention est encore de fournir un tel procédé qui soit simple et facile à mettre en oeuvre industriellement.

Le but de l'invention est également de fournir des sols présentant une teneur élevée en matière sèche.

L'invention a pour objet un procédé pour la préparation de sols de particules de silice avec un taux d'agrégation et/ou d'agglomération réduit, du type comprenant la synthèse de sols de silice par réaction en solution d'un silicate avec un agent acidifiant, caractérisé en ce que, au cours de ladite synthèse, on réduit parallèlement la quantité de sels présents dans la solution réactionnelle, par électrodialyse de ladite solution dans un appareil (3).

Les inventeurs ont mis en évidence que l'on pouvait réduire sensiblement et même éviter le taux d'agrégation et d'agglomération des particules dans les sols de silice en couplant une opération d'électrodialyse avec l'opération de synthèse de sols de silice par réaction entre un silicate et un agent acidifiant en mélange en solution aqueuse.

Ils ont ainsi montré qu'en amenant la solution réactionnelle silicate/agent acidifiant dans un électrodialyseur formé d'une ou plusieurs cellules, on pouvait diminuer la quantité de sels présents en solution et éliminer ces sels au fur et à mesure de leur formation. On contrôle ainsi la force ionique du milieu et cela permet d'obtenir directement, en adaptant les conditions opératoires, les sols de silice désirés en vue d'applications données, notamment avec un taux d'agrégats très faible, de préférence nul, et une taille de particule définis, et pouvant présenter une teneur en matière sèche élevée.

L'invention va être décrite plus en détail dans la description donnée ci-après en référence à la figure unique qui illustre schématiquement le procédé selon l'invention.

Selon le procédé de l'invention, on réalise parallèlement la synthèse de la suspension colloïdale de silice dans un réacteur 1 et l'élimination contrôlée des sels produits lors de cette réaction dans un électrodialyseur 3.

Par "sols de silice à taux d'agrégation et/ou d'agglomération réduit", on entend selon l'invention, des sols de particules de silice présentant un taux d'agrégation/agglomération faible par comparaison au taux obtenu lors de la synthèse desdits sols par réaction en solution d'un silicate avec un agent acidifiant, ou, de préférence, des sels de particules de silice non agégées/agglomérées.

Les sols obtenus selon l'invention présentent généralement un taux de particules de silice agrégées (déterminé par Microscopie Electronique à Transmission), par rapport au nombre total de particules de silice (agrégées et non agrégées), inférieur à 15% en nombre, de manière préférée inférieur à 10% en nombre. De manière avantageuse, ce taux est inférieur à 5% en nombre, en particulier inférieur à 1 % en nombre. Il est habituellement (sensiblement) nul.

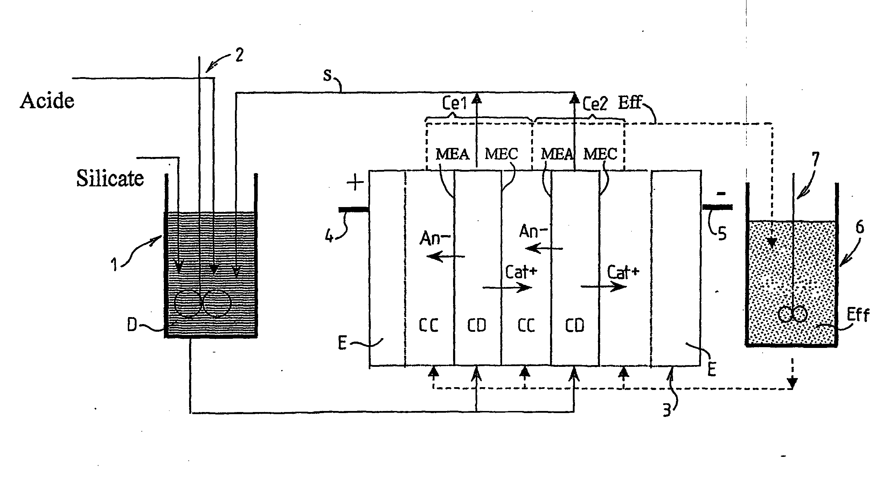

Si l'on se réfère à la figure 1, on voit plus précisément que l'on met tout d'abord à réagir dans un réacteur 1 muni de moyens d'agitation 2, un silicate de métal alcalin SiO₂/nM₂O, n étant le rapport molaire du silicate, et un agent acidifiant (désigné simplement par "acide") pour réaliser la synthèse du sol de silice.

Le choix de l'agent acidifiant et du silicate se fait d'une manière bien connue en soi.

On peut rappeler que l'on utilise généralement, comme agent acidifiant, un acide minéral fort, tel que l'acide sulfurique, l'acide phosphorique, l'acide nitrique ou l'acide chlorhydrique, ou un acide organique tel que l'acide acétique, l'acide formique ou l'acide carbonique.

On peut utiliser par ailleurs en tant que silicate, toute forme courante de silicates tels que métasilicates, disilicates et de préférence un silicate de métal alcalin M, notamment le silicate de sodium ou de potassium.

De manière générale, on préfère employer de l'acide sulfurique comme agent acidifiant et du silicate de sodium comme silicate.

Dans le cas où l'on utilise le silicate de sodium, celui-ci présente, en général, un rapport pondéral SiO₂/Na₂O compris entre 2 et 4, par exemple entre 3,0 et 3,7.

Selon un mode de mise en oeuvre préférentiel de l'invention, on réalise la synthèse du sol de silice de la manière suivante :
(i) On prépare un pied de cuve initial avec du silicate en solution aqueuse, dans lequel la quantité de silicate ne représente avantageusement qu'une partie de la quantité totale du silicate de métal alcalin M engagé dans la réaction.
   La concentration en silicate exprimée en SiO₂ dans ledit pied de cuve initial est de préférence comprise entre 1 et 40 g/l, en particulier entre 1 et 20 g/l.
(ii) On ajoute l'agent acidifiant audit pied de cuve initial formé comme indiqué ci-dessus.
   Cette addition entraîne une baisse corrélative du pH du milieu réactionnel et est poursuivie jusqu'à ce qu'on atteigne une valeur du pH d'au moins 7, généralement comprise entre 8 et 9,5.
(iii) Lorsque la valeur de pH souhaitée est atteinte, on ajoute au milieu réactionnel simultanément de l'agent acidifiant et du silicate de métal alcalin M.

Cette addition simultanée est de préférence réalisée de manière telle que la valeur du pH soit constamment égale (à +/- 0,2 près) à celle atteinte à l'issue de l'étape (ii).

Le silicate peut présenter une concentration exprimée en silice entre 1 et 300 g/l, par exemple entre 50 et 280 g/l.

L'agent acidifiant peut être dilué ou concentré : sa normalité peut être comprise entre 1 et 20 N, par exemple entre 1 et 2 N.

En particulier, dans le cas où l'agent acidifiant est l'acide sulfurique, sa concentration peut être comprise entre 10 et 900 g/l, par exemple entre 50 et 100 g/l.

Selon une caractéristique du procédé selon l'invention, on envoie le mélange réactionnel du réacteur 1 dans l'électrodialyseur 3 simultanément à l'addition conjointe de silicate et d'agent acidifiant.

Dans un mode de mise en oeuvre préféré, l'électrodialyseur comprend une cellule ou un empilement de plusieurs cellules Ce₁; Ce₂, ..., contenant chacune alternativement des membranes anioniques (MEA) et des membranes cationiques (MEC) délimitant des compartiments de concentration (CC) et de dilution (CD) adjacents pour chaque cellule.

Schématiquement, l'électrodialyse permet, sous l'influence d'un champ électrique continu, d'extraire par migration au, travers de membranes échangeuses d'ions les espèces ionisées contenues dans la solution à traiter.

En effet, sous l'action du champ électrique les cations (symbolisés Cat⁺) de la solution silicate/acide à traiter migrent vers la cathode en sortant du compartiment de dilution (CD) où ils se trouvent, à travers une membrane échangeuse de cations MEC (membrane cationique). Lorsqu'ils sont passés dans le compartiment de concentration (CC) suivant, ils ne peuvent pas le quitter en raison de la présence de la membrane échangeuse d'anions MEA (membrane anionique) suivante. Simultanément les anions (symbolisés An-) migrent vers l'anode en traversant une membrane anionique MEA et passent dans un compartiment CC adjacent, qu'ils ne peuvent ensuite pas quitter en raison de la présence de la membrane cationique MEC suivante.

Les compartiments de dilution CD s'appauvrissent ainsi en composé à séparer, c'est-à-dire en sel dans le procédé de l'invention (le sulfate de sodium dans le cas d'une synthèse à partir de silicate de sodium et d'acide sulfurique) et les compartiments de concentration CC s'enrichissent à l'inverse en composé à séparer, c'est-à-dire en sel.

Dans le procédé selon l'invention, les protons ne sont pas directement amenés dans l'électrodialyseur 3, mais dans un réacteur 1 séparé : on évite la formation d'un gradient de pH aux électrodes ou à la surface des membranes, et donc l'apparition d'un phénomène de gélification et ainsi des problèmes de colmatage.

Deux compartiments CC et CD adjacents forment une cellule Ce d'électrodialyse, l'électrodialyseur comportant préférentiellement un empilement de plusieurs cellules Ce₁, Ce₂, ....

Le nombre de cellules de l'électrodialyseur est de manière générale aussi élevé que possible. Par exemple, ce nombre peut varier avantageusement entre 5 et 800 cellules, notamment entre 5 et 500 cellules.

En pratique, les membranes anioniques et cationiques sont en général disposées alternativement dans un système de type filtre-presse.

Les membranes homopolaires utilisables dans le procédé de l'invention se divisent en deux grandes familles, selon leur mode de fabrication.

Ce sont tout d'abord les membranes hétérogènes, préparées à partir de résines échangeuses d'ions, mélangées à un liant tel que polychlorure de vinyle, polyéthylène ou autre. L'ensemble ainsi formé peut enduire une trame, comme par exemple un tissu de polyester ou de polyacrylonitrile.

Ce sont également les membranes homogènes, obtenues par introduction d'un groupement fonctionnel sur un support inerte, par greffage chimique ou radiochimique.

La méthode chimique la plus utilisée consiste généralement à fonctionnaliser un latex d'un polymère comportant des noyaux aromatiques, tel que styrène/divinylbenzène ou styrène/butadiène. Le latex ainsi fonctionnalisé sert ensuite à enduire une trame comme pour les membranes hétérogènes. La méthode radiochimique comporte généralement le greffage, sous l'influence d'un rayonnement, d'un composé aromatique, tel que le styrène, sur un support inerte comme une feuille de polyéthylène ou de polytétrafluoroéthylène. Le noyau aromatique est ensuite fonctionnalisé comme dans la méthode chimique.

Les membranes échangeuses de cations (membranes cationiques) comportent des groupements acides forts, le plus souvent des groupements sulfonates, ou des groupements acides faibles, souvent des groupements carboxylates. Plus rarement les groupements acides peuvent être des groupements PO₃²⁻, HPO₂ , AsO₃²⁻ ou SeO₃⁻.

Les membranes échangeuses d'anions (membranes anioniques) comportent des groupements basiques forts, le plus souvent des groupements ammonium quaternaire, ou des groupements basiques faibles, le plus souvent des groupements amines. Plus rarement, les groupements basiques peuvent être des groupements phosphonium quaternaire ou des groupements sulfonium.

Dans le présent procédé, les membranes cationiques comportent de préférence des groupements acides forts et, parmi ceux-ci, préférentiellement des groupements sulfonates et les membranes anioniques comportent de préférence des groupements basiques forts et, parmi ceux-ci, préférentiellement des groupements ammonium quaternaire.

Le choix des membranes tient souvent à des questions de disponibilité et de coût, voire de température comme indiqué plus loin.

Outre les membranes, l'électrodialyseur comporte bien entendu deux électrodes 4 et 5 formant respectivement une cathode et une anode constituées en des matériaux classiquement utilisés en électrodialyse.

L'anode est par exemple en graphite, en titane revêtu par des métaux précieux ou des oxydes de métaux précieux, notamment le titane platiné. La cathode est par exemple en graphite, en acier inoxydable, en nickel.

L'électrodialyseur est alimenté avec la solution réactionnelle silicate/acide à traiter sous forme au moins partiellement aqueuse.

Il est également nécessaire de faire circuler à l'anode une solution d'un anolyte et à la cathode une solution d'un catholyte. Ces solutions constituent souvent une solution unique d'électrolyte. Dans le présent procédé, un circuit unique d'électrolyte E convient bien, l'électrolyte E étant placée dans l'intervalle défini par l'électrode (respectivement cathode ou anode) et la première membrane (respectivement membrane cationique MEC ou membrane anionique MEA) adjacente.

Le terme électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal du silicate de départ et de l'agent acidifiant, de préférence le sulfate de sodium dans le cas de la réaction d'un silicate de sodium avec l'acide sulfurique.

Le rôle de la solution d'électrolyte est d'assurer une conductivité suffisante. De préférence, cette conductivité est égale ou supérieure à 20 millisiemens par centimètre (mS/cm).

La tension appliquée à l'électrodialyseur doit être de nature à éviter la polarisation du système, c'est-à-dire une dissociation de l'eau sous l'effet d'un champ électrique trop intense. En général, une tension de 0,5 à 2,5 volt/cellule et, de préférence, de 0,5 à 1,5 voit/cellule est appropriée. L'effet de polarisation peut être diminué en augmentant la turbulence du liquide, par l'utilisation de cellules minces conjointement avec des cadres séparateurs. On préfère des cellules ayant une largeur de 0,5 à 2 mm et de préférence de 0,75 à 1,5 mm.

La densité de courant (par rapport à la surface de membrane) est généralement de 10 à 50 mA/cm². Sa valeur influence les coûts de mise en oeuvre.

La température à laquelle est mis en oeuvre le procédé de l'invention se situe dans un domaine compatible avec la stabilité des membranes. En effet, si en principe les températures élevées sont favorables, en accroissant la mobilité électrolytique et en réduisant la viscosité de la solution à traiter, l'augmentation de la température diminue la durée de vie des membranes. On opère donc de préférence à une température inférieure ou égale à 70°C et, plus particulièrement, à une température comprise entre 20 et 60°C.

Pour la mise en oeuvre du procédé selon l'invention, on prévoit également une cuve destinée à recevoir l'effluent (Eff) issu de l'opération d'électrodialyse, contenant le sel éliminé en solution. La cuve 6 est avantageusement munie de moyens de mélange 7, et contient initialement une solution aqueuse du sel à éliminer (généralement une solution aqueuse de sulfate de sodium) faiblement concentrée, par exemple entre 3 et 8 g/l, que l'on va faire circuler au départ dans les différents compartiments de l'électrodialyseur 3, avec un débit de 10 à 30 l/h/cellule, par exemple de 20 l/h/cellule.

Lors du déroulement du procédé l'invention, on récupère les sels éliminés sous forme de solution Eff en sortie des différentes cellules Ce₁, Ce₂ ... dans la cuve 6. La solution aqueuse ainsi récupérée peut être recyclée vers les cellules de l'électrodialyseur qui fonctionne alors en boucle.

Le sol de silice S recherché est quant à lui récupéré en sortie de l'électrodialyseur 3.

Le procédé selon l'invention peut être mis en oeuvre de manière continue, semi-continue ou séquentielle.

Il permet d'obtenir un taux d'agrégation et d'agglomération très faible, de préférence nul, des particules de silice dans la préparation de sols.

On peut par exemple ajuster la durée de traitement du mélange, ainsi que les flux massiques entrant et sortant selon le produit désiré.

Conformément à l'invention, on obtient des sols de silice dont la teneur en matière sèche peut être élevée. Celle-ci est typiquement de l'ordre de 6% et peut atteindre au moins 20%.

Les particules de silice dans les sols obtenus par le procédé de l'invention sont habituellement sous forme de billes sphériques, dont la taille (mesurée par Microscopie Electronique à Transmission) peut typiquement varier de 5 à 25 nm (particules isolées), en particulier de 10 à 20 nm.

La teneur en matière sèche desdits sols est avantageusement élevée, et en général comprise entre 50 et 200 g/l.

Les sols obtenus peuvent bien entendu être concentrés par les techniques classiquement utilisées, si nécessaire.

Ces sols sont généralement polydisperses. Une étape de mûrissement, par exemple entre 70 et 90°C, est possible si l'on souhaite limiter cette polydispersité.

Les sols de particules de silice selon l'invention sont utilisables dans une grande diversité d'applications, notamment à titre de renfort de charge dans le papier, le caoutchouc et les revêtements.

L'invention est illustrée ci-après à l'aide d'exemples donnés à titre non limitatif.

### EXEMPLES

### EXEMPLE 1 :

Deux litres de silicate de sodium présentant un ratio SiO₂ : Na₂O de 3,5 dilué à 5 g/l de SiO₂ sont agités et chauffés à 60°C. La solution est amenée progressivement à pH 8,2 par ajout d'acide sulfurique de concentration 80 g/l. Après mise à pH, il y a addition simultanée de silicate de sodium (de rapport 3,5) à une concentration de 230 g/l (10 g/mn) et d'acide sulfurique de concentration 80 g/l afin de réguler le pH à 8,2. Parallèlement à l'addition simultanée, la solution passe dans le compartiment (CD) d'un électrodialyseur afin de contrôler la quantité de sels présents en solution et limiter ainsi la force ionique du milieu. On fixe la quantité de sels en contrôlant la conductivité de la solution. Celle-ci est régulée à 5 mS/cm. Le débit de circulation de cette solution est de 200 l/h, soit 28 l/h/cellule.

L'électrodialyseur utilisé est constitué par un empilement de 7 cellules de 2 dm² de surface active, composées chacune d'un compartiment où l'on introduit la solution à traiter (compartiment CD) et d'un compartiment (CC) qui recevra le sel au cours de l'électrodialyse.

Les membranes séparant chaque compartiment (CD) du compartiment (CC) adjacent sont :
- membrane anionique de marque NEOSEPTA® AMX à groupements ammonium quaternaire,
- membrane cationique de marque NEOSEPTA® CMX à groupements sulfonates.

L'électrolyte est constitué par une solution aqueuse de Na₂SO₄, ayant une conductivité de 100 mS/cm à 20°C. Le débit de circulation de cette solution est de 400 1/h et son est volume est de 2 1.

La solution qui circule dans les compartiments (CC) et qui va recevoir le sel est au départ une solution aqueuse de Na₂SO₄ à 40 g/l, elle a un volume de 2 1 et circule avec un débit de 200 1/h. La conductivité initiale de la solution dans le compartiment (CC) est de 60 mS/cm.

L'électrodialyse est conduite à intensité constante de 5,5 A, de manière continue pendant une durée de 390 minutes.

On obtient ainsi un sol de particules de silice non agrégées ayant une taille de 18-20 nm, à une concentration de 13% (matière sèche).

### EXEMPLES 2 et 3 :

On reprend l'exemple 1 dans les conditions indiquées ci-dessous, l'électrodialyse étant dans ces deux cas réalisée en mode semi-continu.

| | | Exemple 1 | Exemple 2 | Exemple 3 |
|---|---|---|---|---|
| Mode | | Continu | Semi-continu | Semi-continu |
| Durée | (mn) | 390 | 120 | 75 |
| Température (moy.) | (°C) | 60 | 60 | 50 |
| Débit de silicate (addition simultanée) | (g/mn) | 10 | 10 | 12,5 |
| Conductivité (moy.) | (mS/cm) | 6 | 6 | 5 |
| Extrait sec final | (%) | 13 | 7 | 5,9 |
| [SiO₂] finale | (g/l) | 103 | 64 | - |
| Taille (MET) | (nm) | 18-20 | 15 | 10-15 |

## Revendications

1. Procédé pour la préparation de sols de silice avec un taux d'agrégation et/ou d'agglomération réduit, du type comprenant la synthèse de sols de silice par réaction en solution d'un silicate avec un agent acidifiant, **caractérisé en ce que**, au cours de ladite synthèse, on réduit parallèlement la quantité de sels présents dans la solution réactionnelle, par électrodialyse de ladite solution dans un appareil (3).

2. Procédé selon la revendication 1, **caractérisé en ce que** l'électrodialyse est réalisée dans un appareil (3) comprenant une ou plusieurs cellules (Ce₁, Ce₂,...), chacune étant formée de deux compartiments adjacents (CC, CD) délimités respectivement par une membrane cationique (MEC) et une membrane anionique (MEA).

3. Procédé selon l'une quelconque des revendications précédentes, **caractérisé en ce que** l'on réalise la synthèse du sol de silice de la manière suivante :
i) on prépare un pied de cuve (1) initial comportant une solution aqueuse de silicate, dans lequel la quantité de silicate ne représente avantageusement qu'une partie de la quantité totale du silicate engagé dans la réaction,
ii) on ajoute un agent acidifiant audit pied de cuve jusqu'à l'obtention d'une valeur de pH du milieu réactionnel d'au moins 7,
iii) lorsque la valeur de pH désiré est atteinte, on ajoute au milieu réactionnel simultanément du silicate et de l'agent acidifiant,
et **en ce que**, parallèlement à l'étape iii), on traite le milieu réactionnel résultant par électrodialyse.

4. Procédé selon l'une quelconque des revendications précédentes, **caractérisé en ce que** le silicate est un silicate de métal alcalin, de préférence du silicate de sodium et l'agent acidifiant est un acide minéral fort, de préférence l'acide sulfurique, l'électrolyte (E) étant alors de préférence du sulfate de sodium.

5. Procédé selon l'une quelconque des revendications précédentes, **caractérisé en ce qu'**il est réalisé en continu ou en semi-continu.

6. Procédé selon l'une quelconque des revendications précédentes, **caractérisé en ce que** la température réactionnelle est inférieure ou égale à 70°C.

## Claims

1. Process for preparing silica sols with a reduced aggregation and/or agglomeration rate, of the type comprising synthesis of silica sols by reacting in solution a silicate with an acidifying agent, **characterised in that** during said synthesis, the quantity of salts present in the reaction solution is reduced in parallel by electrodialysis of said solution in an apparatus (3).

2. Process according to claim 1, **characterised in that** the electrodialysis is carried out in an apparatus (3) comprising one or more cells (Ce₁, Ce₂, ....), each being formed of two adjacent compartments (CC, CD) defined respectively by a cationic membrane (MEC) and an anionic membrane (MEA).

3. Process according to any one of the preceding claims, **characterised in that** the synthesis of the silica sol is carried out in the following manner:
i) an initial feedstock is prepared containing an aqueous solution of silicate, in which the quantity of silicate advantageously represents only a part of the total quantity of silicate involved in the reaction,
ii) an acidifying agent is added to the said feedstock until a pH value of the reaction medium of at least 7 is obtained,
iii) when the desired pH value is attained, the silicate and the acidifying agent are added simultaneously to the reaction medium,
and **in that**, in parallel with stage iii), the resulting reaction medium is subjected to electrodialysis.

4. Process according to any one of the preceding claims, **characterised in that** the silicate is an alkali metal silicate, preferably sodium silicate and the acidifying agent is a strong mineral acid, preferably sulphuric acid, the electrolyte (E) **in that** case preferably being sodium sulphate.

5. Process according to any one of the preceding claims, **characterised in that** it is carried out continuously or semi-continuously.

6. Process according to any one of the preceding claims, **characterised in that** the reaction temperature is less than or equal to 70°C.

## Patentansprüche

1. Verfahren zur Bereitung von Quarzböden mit einem geringen Aggregations- und/oder Agglomerationsgrad, der Art, die die Synthese von Quarzböden durch Reaktion eines Silikates in Lösung mit einem Säuerungsmittel umfasst, **dadurch gekennzeichnet, dass** im Verlauf der genannten Synthese parallel die Menge in der Reaktionslösung anwesender Salze durch Elektrodialyse der genannten Lösung in einem Apparat (3) verringert wird.

2. Verfahren nach Patentanspruch 1, **dadurch gekennzeichnet, dass** die Elektrodialyse in einem Apparat (3) erfolgt, der eine oder mehrere Zellen (Ce₁, Ce₂,...) aufweist, wobei jede aus zwei aneinander anschließenden Abteilungen (CC, CD) besteht, die durch eine Kationenmembran (MEC) bzw. eine Anionenmembran (MEA) begrenzt sind.

3. Verfahren nach irgendeinem der vorangehenden Patentansprüche, **dadurch gekennzeichnet, dass** die Synthese des Quarzbodens in folgender Weise erfolgt:
i) es wird ein Ausgangsgemisch (1) aus einer wässrigen Silikatlösung bereitet, in der die Menge an Silikat vorteilhafterweise nur einen Teil der Gesamtmenge an der Reaktion beteiligten Silikates darstellt,
ii) es wird dem genannten Ausgangsgemisch ein Säuerungsmittel zugesetzt, bis ein pH-Wert des Reaktionsmediums von mindestens 7 erreicht wird,
iii) wenn der gewünschte pH-Wert erreicht ist, wird dem Reaktionsmedium gleichzeitig Silikat und Säuerungsmittel zugesetzt, und dadurch, dass das sich ergebende Reaktionsmedium parallel zum Schritt iii) durch Elektrodialyse behandelt wird.

4. Verfahren nach irgendeinem der vorangehenden Patentansprüche, **dadurch gekennzeichnet, dass** das Silikat ein Alkalimetallsilikat ist, vorzugsweise Natriumsilikat, und das Säuerungsmittel eine starke Mineralsäure, vorzugsweise Schwefelsäure, wobei der Elektrolyt (E) dann vorzugsweise Natriumsulfat ist.

5. Verfahren nach irgendeinem der vorangehenden Patentansprüche, **dadurch gekennzeichnet, dass** es kontinuierlich oder halbkontinuierlich ausgeführt wird.

6. Verfahren nach irgendeinem der vorangehenden Patentansprüche, **dadurch gekennzeichnet, dass** die Reaktionstemperatur niedriger oder gleich 70°C ist.
